Europäisches Patentamt

European Patent Office

Office européen des brevets .

(11) Publication number: **0 218 952 B1**

# EUROPEAN PATENT SPECIFICATION

(45) Date of publication of patent specification: **21.08.91**

(51) Int. Cl.⁵: **B29C 47/02**, H01B 13/14, G02B 6/44

(21) Application number: **86113034.2**

(22) Date of filing: **22.09.86**

(54) Process and line for manufacturing cables.

(30) Priority: **27.09.85 IT 2230285**

(43) Date of publication of application:
**22.04.87 Bulletin 87/17**

(45) Publication of the grant of the patent:
**21.08.91 Bulletin 91/34**

(84) Designated Contracting States:
**FR GB SE**

(56) References cited:

| | |
|---|---|
| BE-A- 664 351 | DE-A- 1 765 453 |
| DE-C- 2 559 985 | FR-A- 1 072 170 |
| FR-A- 1 375 910 | GB-A- 2 134 842 |
| JP-A-52 033 087 | JP-A-54 101 189 |
| US-A- 2 778 059 | US-A- 3 405 426 |
| US-A- 4 129 468 | US-A- 4 205 899 |

(73) Proprietor: **PIRELLI CAVI S.p.A.**
**Piazzale Cadorna, 5**
**I-20123 Milan(IT)**

(72) Inventor: **Gazzana Priaroggia, Paolo**
**Piazza S. Ambrogio, 8**
**Milan(IT)**
Inventor: **Cecchi, Feliciano**
**Via Giacomo Matteotti, 8**
**Inverun Milan(IT)**

(74) Representative: **Sirtori, Giorgio et al**
**Pirelli S.p.A. Direzione Brevetti Piazzale**
**Cadorna, 5**
**I-20123 Milano(IT)**

## Description

The present invention refers to a process and to a line for manufacturing optical-fibres and/or electical cables, of the type wherein the transmissive elements are completely embedded in the polymeric material of the cable, according to an open-helix configuration, around the cable axis.

In particular, the process and the line according to the invention, are aimed at manufacturing cables whose structure preferably comprises a traction resistant rope, or suchlike, that occupies the radially inner position and which is embedded in a polymeric body wherein are entirely embedded the transmissive component parts constituted by the filiform elements (to be defined herebelow) disposed, according to an open-helix, around the rope.

In this text, by the term: 'filiform elements' are intended both, optical-fibres which are protected by an adherent, or preferably, a loose type of protection, as well as electrical conductors.

Morover, by the term: 'open-helix' it is intend that the said filiform elements are disposed around the axis of the cable, or around the rope that occupies the cable's radially innermost position, according to alternated S-shaped and Z-shaped tracts.

A process and a line are already known, for manufacturing the type of cables described above. This known process foresees the phases that are given herebelow:

To begin with, a first polymeric layer is formed on the traction resistant rope which constitutes the radially innermost part of the cable.

Filiform elements, are wound in an open-helix configuration and, at the same time, fixed through binding them as effected by means of wires, tapes and suchlike, on the outer surface of the first polymeric layer.

Thereafter, upon the complex obtained through the previous phase, there is extruded a second polymeric layer that adheres to the outer surface of the first layer (forming together with it the polymeric body of the cable), with thus embedding the filiform elements connected to the first layer.

The known line, for manufacturing the cables in question, comprises, downstream of a bobbin from where is uncoiled the rope forming the radially innermost part of the cable, a first extruder that extrudes a first polymeric layer over the rope.

Downstream of the first extruder, there is present a device which provides for winding the filiform elements, in a open-helix way, on the outer surface of the first polmeric layer.

There immediately follows a mechanism that carries out a binding of the open-helix winding of the filiform elements to the first layer, at points spaced along the cable axis, by means of coiling a wire, a steel ribbon or suchlike, just as these windings are gradually formed.

Downstream of the mechanism which effectuates the said binding, there is present a second extruder which provides for forming a second polymeric layer that covers the first layer (forming along with this, the polymeric body of the cable) that embeds the open-helix windings of the filiform elements fixed to the first layer by the bindings.

In the known process and line, it is essential to bind the open-helix, wound filiform elements, to the first polymeric layer to thus allow for the extrusion of the second polymeric layer, and for obviating during this operation, alterations taking place in the correct open helix configurations of the filiform elements.

In spite of the presence of the bindings, an impossibility was encountered in maintaining a constant and precise spacing between the adjacent filiform elements, during the extrusion of the second layer.

Moreover, the bindings of the filiform elements, that are only required for the purpose of manufacturing the cable, involve introducing into the latter, an element that serves no use for functioning the cable itself, and which moreover, proves to be detrimental, seeing that the presence of the bindings gives rise to cavities being formed, in the polymeric material of the cable, which prevents the perfect and entire embedment of the filiform elements into the polymeric material.

In another known process, according to the GB-A-2.134.842 patent, is described the manufacture of a cable in which optical fibres are lodged in cavities of a polymeric body formed by extrusion around a reinforcing member positioned along the cable axis and embedded in the polymeric body of this latter.

According to this process the open helix configuration of the cavities lodging the optical fibres (and not of the optical fibres) is obtained by directly imposing an alternate rotatory motion to the already extruded polymeric body.

Moreover a known line for manufacturing electric cables (devoid of any reinforcing member disposed along its longitudinal axis and in which conductors are embedded in an open helix configuration inside a common insulation constituted by an extruded polymeric body) is described in the US-A-2.778.059 patent.

According to this patent the means by which the open helix configuration is conferred to the conductors during their passage inside the extrusion head by which they are embedded in the polymeric material is an alternate rotatory motion imparted to the polymeric material through a rotatory motion effected by the inner portion of the extrusion head itself.

The aim of the present invention is to produce cables of the type in question wherein the filiform elements, that are embedded in the polymeric material of the latter and in particular, into a polymeric layer which is extruded around a rope occupying the cable's radially innermost position, are correctly disposed according to open helices, which are equidistanced one from the other, with preventing the presence of any bindings, and with also rendering simpler the production lines for the cables in question.

The object of the present invention is a process for manufacturing cables (11) of the type wherein at least one filiform element (8) having an open-helix configuration with respect to the cable's axis, is embedded in a polymeric material of the latter, said process comprising the steps of feeding an extruder head (4) with a pasty-state polymeric material, of inserting at least one filiform element (8) and a rope (2) into said extruder head (4) so that the rope (2) and the filiform elements (8) are in direct contact with the pasty-state polymeric material passing through the extruder head and are embedded within said polymeric material, of submitting the pasty-state polymeric material, while it advances along the cable axis, to an alternate rotatory motion relative to said axis, with allowing said filiform element (8) to follow the movement of the polymeric material, of stably fixing the open helix configuration by consolidating the said polymeric material, said process being characterized in that the alternate rotatory motion to the pasty-state polymeric material is imparted through subjecting the rope (2), upstream of the extruder head (4), to an alternating torsion and in that the said filaments are introduced within the plastic-state polymeric material flowing inside the extrusion head with their entire outer surface adhering to the polymeric material.

Also forming the object of the present invention is a production line for producing cables of the type wherein at least one filiform element (8) having an open helix configuration with respect to the axis of the cable (11) at which a rope (2) is positioned, is embedded in a polymeric material of this latter, comprising an extruder head (4) provided with at least distinct inlet openings for the pasty state polymeric material, for at least one filiform element (8) and for a rope (2) and a mechanism (3) associated to the extruder head, which subject the pasty state polymeric material, as it advances along the cable axis, to an alternate rotatory motion with respect to the latter, the inlet openings (32) for the filiform elements (8) in the extruder head, debouching into the conduit (35) of this latter wherein the pasty state polymeric material flows so that the filiform elements (8) become completely embedded within said polymeric material and are then dragged along it into an alternate rotatory motion with thus assuming an open helix configuration with respect to the cable axis, said line being characterized by the fact that mechanism (3) is positioned upstream the extruder head (4), engages the rope (2) and subject the same to an alternate rotatory motion causing the alternate rotatory motion of the polymeric material flowing inside the extruder head.

The present invention will be better understood with the aid of the following detailed description made solely by way of non limiting example with referring to the figures of the attached drawing sheet, wherein:

FIG. 1 — schematically shows a line according to the invention.

FIG. 2 — shows a perspective view of a detail of the line of FIG. 1.

FIG. 3 — shows a longitudinal section of the extruder-head, in the line shown in FIG. 1.

FIG. 4 — shows the transversal section of the extruder-head, made along the tract IV-IV of FIG. 3.

The process, according to the invention, for manufacturing optical-fibres and/or electrical cables of the previously defined type, comprises the steps which are given herebelow.

An extruder-head from which the cable exits, is fed with a pasty-state polymeric material and with a plurality of filiform elements, for example, a plurality of optical-fibres having a loose type of protection.

In particular, the filiform elements are introduced into the extruder-head, in a symmetrical manner, with respect to the axis of the latter. The extruder-head is also fed with a traction resistant rope, eventually cladded with a plastic layer, for example, a rope made of steel, or of a material having a similar mechanical resistance, such as the aromatic polyamids, carbon fibres, and suchlike.

The rope, that is intended for forming the mechanically resistant element of the cable core, is inserted into the extruder-head in correspondence of the axis of this latter.

There now follows the phase of embedding, inside of the extruder-head, the filiform elements and the rope into the polymeric material, in such a way that both these have their entire surfaces closely contacting the polymeric material, and so that the filiform elements surround the rope at a distance apart from it.

While the filiform elements, the rope, as well as the pasty-state polymeric material embedding these, advance into the extruder-head and issue forth from it, there takes place the phase of submitting said pasty-state polymeric material to an al-

ternate rotary motion with respect to the axis of the cable, with leaving said filiform elements to follow the movement of the polymeric material embedding them and to be dragged, along with this, into an alternate rotary motion, during their advancement.

Due to the effect of the advancing movement and of the alternate rotary motion, to which the filiform elements are subjected by the pasty-state polymeric material embedding them, they result as having an open-helix configuration in the polymeric material of the cable downstream of the extruder-head.

There now takes place the phase of stably fixing the open-helix configuration imparted to the filiform elements through the means of consolidating the polymeric material that embeds them, which is carried out by cooling and preferably by a rapid and immediate quenching.

The alternate rotary motion of the pasty-state polymeric material, is obtained through imposing an alternating torsion to the rope, embedded in the polymeric material, that occupies the radially innermost position of the cable.

The process according to the invention, is carried out with a line that also forms the object of the present invention. The main elements forming a line, according to the present invention, are:

- An extruder-head, provided for the filiform elements, with inlet openings whose essential characteristic for the line, is to debouch into the extruder-head's conduit wherein the plastic material flows in its pasty-state. The extruder-head is provided moreover, with an inlet opening for allowing the entry of a rope, eventually covered with a layer of plastic material, destined for occupying the radially innermost zone of the cable.

- A mechanism, upstream of the extruder-head, which is capable of subjecting the cable to an alternate rotary motion with respect to said axis which causes an alternate rotary motion of the pasty state polymeric material and which causes the dragging of the said filiform elements embedded in said polymeric material.

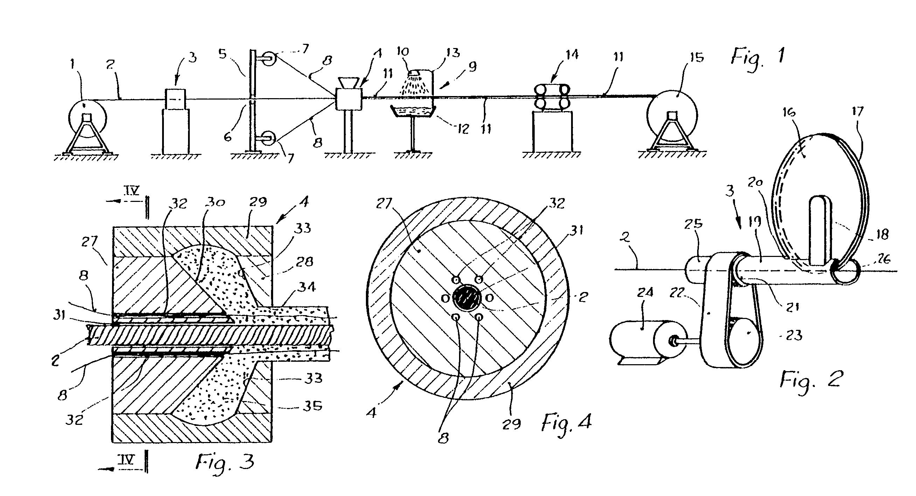

In FIG. 1, there is schematically shown a particular form of realization for a line according to the invention, for manufacturing a cable incorporating a traction resistant rope in the radially innermost zone.

The line shown in FIG. 1, comprises a bobbin 1 on which the above just mentioned rope 2 is collected.

Downstream of bobbin 1, in the advancing direction of the rope 2, there is present a mechanism 3 (to be described further on), which allows for the rope to advance freely towards the extrusion-head 4, but which subjects the rope, while it moves through the extrusion-head, to an alternating torsion.

Between the extruder-head 4 (whose characteristics shall be given further on) and the mechanism 3, there is interposed a support 5 or some such like element, provided with an opening 6 through which the rope 2 passes, to which are connected a plurality of reels on which are stored the filiform elements 8 that have to be sent to the extruder-head.

For example, the filiform elements are optical-fibres, provided with a loosetype of protection and precisely by plastic tubes in which at least one optical-fibre is loosely housed.

Each reel 7, borne by the support 5, can freely rotate around its own axis that is in a fixed position with respect to the support 5.

It results that the filiform elements in the tract comprised between the support 5 and the extruder-head 4, are only subjected to an advancing movement towards the extruder-head.

Downstream of the extruder-head 4, there is present a cooling device 9 comprising at least one nozzle 10 that continuously sends a shower of cooling liquid, for example water, over the cable 11 just as it emerges from the extruder-head 4, as well as a tank 12 for collecting the cooling liquid.

A tube 13 connected to a pump (not shown), draws cooling water from tank 12, and continuously sends said cooling water into the nozzle 10.

Downstream of the cooling device 9, there is disposed a pulling-device 14 of a per se known type, for example: a pulling-device, comprising two endless, tracked gripping devices, that engages the cable 11, and cause it to advance towards the collecting bobbin 15.

As was previously stated, in the line shown in FIG. 1, there is present a mechanism 3, that subjects the rope 2 to an alternated torsion, while it moves through the extruder-head 4.

A particular embodiment for the mechanism 3 is shown in FIG. 2. As can be seen in FIG. 2, the mechanism comprises a pulley 16 provided with a groove 17 that is free to rotate on its own axis, with respect to a bracket radially cantilevered from a hollow shaft or quill 19. This latter is provided with an aperture 20 that allows the pulley 16 to penetrate into the through cavity, in such a way that the pulley results as being tangent to the quill's axis.

A toothed-pulley 21, is fitted onto the quill 19.

A toothed-belt 22 engages with the toothed-pulley 21 and with another toothed-pulley 23 connected to a motor 24 of the type capable of subjecting the toothed-pulley 23 to an alternate rotatory motion and hence, through the belt 22 and the toothed-pulley 21, giving an alternate rotatory motion to the quill 19.

The rope 2 engages with the mechanism 3 penetrating into the cavity of the quill 19 in correspondence of the latter's extremity 25, it reaches the pulley 16 around which it winds with resulting in its being lodged in the groove 17; the rope returns once again into the cavity of the shaft 19 and leaves it through exiting from the extremity 26 for thus reaching and passing through the extruder-head 4. The functioning of the mechanism 3 shall be described further on, when describing the functioning of the line.

In an alternative embodiment (not shown in the figures), the mechanism 3 comprises a continuous pulling-device provided with endless tracked gripping devices (inside which the rope 2 passes) mounted on a frame to which a motor is connected that subjects the frame to an alternate rotatory motion.

As stated previously, on leaving the mechanism 3, the rope 2 penetrates and passes through the extruder-head 4 whose cross-section is shown in large scale in FIGS. 3 and 4.

The extruder-head comprises a first cylindrical body 27 coaxial with a second cylindrical body 28, both enclosed in a cylindrical shell 29.

The first cylindrical body 27 has its base 30 of a conical shape, and it is provided, in correspondence of its own axis with an opening 31 intended for allowing the rope 2 to penetrate into the extruder-head.

Morover, a plurality of through openings 32 symmetrically disposed around the through opening 31 and parallel to it, are made in the first cylindrical body 27 for allowing the entry of the filiform elements 8, into the extruder-head.

The second cylindrical body 28 has its base 33 funnel shaped, and inside it an outlet opening 34 is made for the cable to exit after it has been produced from the extruder-head.

Between the bases 30 and 33 (of the cylindrical bodies 27 and 28) and the inner surface of the cylindrical shell 29, there is present a conduit 35 for the passage into the extruder-ead, of the pasty-state polymeric material that comes from an extruder (not shown) and that goes towards the outlet opening 34 of the extruder-head.

Into the conduit 35, there debouch the through openings 32 by means of which the filiform elements penetrate into the extruder-head for being embedded in the polymeric material and this characteristic is essential for the line, according to the invention.

Preferably, the geometrical axes of the through-openings 32, are parallel to the axis of the cable that is produced and these geometrical axes of the through openings 32, lie on a ring whose diameter has a value not exceeding that of the outlet opening 34 of the extruder-head.

The functioning of the line shown in FIG. 1, is as follows.

The pulling-device 14 engaged with the already produced part of the cable 11, exercises a continous pull upon it, with sending the said cable to the collecting bobbin 15.

The cable 11 and its component elements which are present upstream of the pulling-device 14 are, through the action of this latter, also caused to advance in a continuous manner.

As a consequence, the rope 2 and the plurality of filiform elements 8, unroll with respect from the bobbin 1 and from the reels 7 with advancing towards the extruder-head and then penetrate into it.

Prior to reaching the extruder-head, said rope 2 is forced to pass into the mechanism 3 where it is subjected to an alternated torsion, even though it is allowed to advance freely.

The manner in which the mechanism 3 subjects the rope 2 to the alternated torsion is as follows.

In passing into the mechanism 3, the rope 2 results as being disposed in correspondence of the axis of the hollow shaft, except for that tract where it winds around pulley 16 adhering to the base of pulley groove 17.

The alternate rotation, imparted to the quill 19 by motor 24 through the means of the toothed pulleys 23 and 21, that are connected by the belt 22, forces the pulley 16, on which the rope 2 winds, to rotate in an alternated way with respect to the axis of said hollow shaft along which the rope 2 is found. Therefore, this latter results as being subjected to an alternated torsion even though it is free to slide into the hollow shaft, seeing that the pulley 16, on which the said cord is engaged, is free to rotate around the bracket 18 that supports it.

While the rope 2 passes through the extruder-head 4 by penetrating into its through-opening 31, it results as being subjected to the alternated torsion that is imparted to it by the mechanism 3, and it becomes embedded in the pasty-state polymeric material which is introduced into the extruder-head by an extruder (not shown in the figures).

By the through openings 32, there also enter into the extruder-head 4, the filiform elements 8 which are completely embedded in the pasty-state polymeric material.

Whereas, in the extruder-head 4, the filiform elements 8, the rope 2, and the pasty-state polymeric material that enbeds them all advance and issue forth from the outlet opening 34, the alternated torsion, that is had by the rope whose external surface closely contacts the pasty-state polymeric material, drags this latter into an alternate rotatory motion relative to the axis of the just produced cable.

In fact, the irregularities that exist on the outer surface of rope 2, owing to the presence of the component wires or else (if the rope is clad with plastic) owing to the friction existing between said plastic cladding and the pasty-state polymeric material, drag the thin layer of this latter into close contact with the rope, during the movement of the outer surface of the latter that is an alternate rotatory movement.

The particularly high viscosity of the pasty-state polymeric material, causes that the alternate rotatory motion originated when in contact with the rope, is transmitted to the mass of polymeric material, till involving at least that portion of the latter wherein the said filiform elements 8 are embedded.

Hence, these latter are dragged, by the polymeric material that embeds them, into an alternate rotatory motion, around the axis of the cable, and this action causes these filiform elements to assume an open-helix configuration around the cable axis and hence, around the rope 2 which occupies the radially innermost position inside the cable.

The cooling device 9 present downstream of the extruder-head, which causes the consolidifying of the polymeric material, stably blocks therein the filiform elements in the open-helix configuration imparted to them.

With the process and the line according to the invention, the open-helix configuration, around the cable axis, of the filiform elements embedded in the polymeric material, is obtained by simply subjecting said latter (when it is in its pasty-state inside the extruder-head, and/or near its outlet opening) to an alternate rotatory motion relative to the axis of the cable, in such a way that the filiform elements follow said movement of the polymeric material.

The alternate rotatory motion, relative to the cable axis, that is so imposed on these filiform elements is a symmetrical motion, with respect to said axis, and this allows for just obtaining a correct open-helix conformation of the filiform elements and furthermore, it also makes sure that adjacent filiform elements are perfectly equidistant from one another.

The consolidation through the cooling of the polymeric material that, due to the symmetrical form it has in the produced cable, takes place in a radially uniform manner, then allows for effecting through this latter, the stable blocking of the open-helix configuration of the filiform elements without causing any alterations in their configuration. In this way, there is eliminated the presence of any binding that, to-date, was held to be indispensable for obtaining the type of cable in question.

Moreover, the process and the line according to the invention, render the manufacturing of the cables in question, to be simpler and cheaper.

In fact, whereas with the known process and line, the polymeric material of the cable must be formed through extruding two successive superimposed layers, with interposing the operations of winding the filiform elements in an open-helix configuration and of binding them to the first formed layer of polymeric material; with the process and the line according to our invention, just a single extruding operation is required during which there is conferred to the filiform elements the open-helix configuration needed, with eliminating the need of bindings that represent an element which is useless for the purpose of cable functioning and moreover, which proves to be harmful, because the presence of these bindings cause cavities to be formed in the polymeric material of the cable with a consequent imperfect embedding of the filiform elements inside said polymeric material.

## Claims

1. Process for manufacturing cables (11) of the type wherein at least one filiform element (8) having an open-helix configuration with respect to the cable's axis, is embedded in a polymeric material of the latter, said process comprising the steps of feeding an extruder head (4) with a pasty-state polymeric material, of inserting at least one filiform element (8) and a rope (2) into said extruder head (4) so that the rope (2) and the filiform elements (8) are in direct contact with the pasty-state polymeric material passing through the extruder head and are embedded within said polymeric material, of submitting the pasty-state polymeric material, while it advances along the cable axis, to an alternate rotatory motion relative to said axis, with allowing said filiform element (8) to follow the movement of the polymeric material, of stably fixing the open helix configuration by consolidating the said polymeric material, said process being characterized in that the alternate rotatory motion to the pasty-state polymeric material is imparted through subjecting the rope (2), upstream of the extruder head (4), to an alternating torsion and in that the said filaments are introduced within the plastic-state polymeric material flowing inside the extrusion head with their entire outer surface adhering to the polymeric material.

2. Process according to claim 1 characterized by the fact that the consolidating of the polymeric material through which the open helix configuration of the filiform elements embedded in them is rendered stable, is obtained through cooling the polymeric material as it exits from the extruder head.

3. Line for producing cables of the type wherein at least one filiform element (8) having an open helix configuration with respect to the axis of the cable (11) at which a rope (2) is positioned, is embedded in a polymeric material of this latter, comprising an extruder head (4) provided with at least distinct inlet openings for the pasty state polymeric material, for at least one filiform element (8) and for a rope (2) and a mechanism (3) associated to the extruder head, which subject the pasty state polymeric material, as it advances along the cable axis, to an alternate rotary motion with respect to the latter, the inlet openings (32) for the filiform elements (8) in the extruder head, debouching into the conduit (35) of this latter wherein the pasty state polymeric material flows so that the filiform elements (8) become completely embedded within said polymeric material and are then dragged along it into an alternate rotary motion with thus assuming an open helix configuration with respect to the cable axis, said line being characterized by the fact that mechanism (3) is positioned upstream the extruder head (4), engages the rope (2) and subject the same to an alternate rotary motion causing the alternate rotary motion of the polymeric material flowing inside the extruder head.

4. Line according to claim 3 characterized in that the mechanism (3) by which the rope (2) is subjected to an alternate rotary motion comprises an hollow shaft (19) provided with means (21,22,23,24) which impart to it an alternate rotary motion and a pulley (16), with which the rope is engaged, freely rotatable on its own axis, said pulley being brought by brackets radially cantilevered from the hollow shaft (19) and being tangent to the axis of this latter along which the rope (2) is made to pass.

## Revendications

1. Procédé de fabrication de câbles (11) du type dans lequel au moins un élément filiforme (8) à configuration en hélice ouverte par rapport à l'axe du câble est enrobé dans une matière polymère de ce dernier, ledit procédé comprenant les étapes consistant à amener, à une tête extrudeuse (4), une matière polymère à l'état pâteux, à insérer au moins un élément filiforme (8) et un brin (2) dans ladite tête extrudeuse que façon que le brin (2) et les éléments filiformes (8) soient en contact direct avec la matière polymère à l'état pâteux qui traverse la tête extrudeuse et soient enrobés à l'intérieur de ladite matière polymère, à soumettre la matière polymère à l'état pâteux tandis qu'elle avance le long de l'axe du câble, à un mouvement rotatif alterné par rapport audit axe, en permettant audit élément filiforme (8) de suivre le déplacement de la matière polymère, à fixer de façon stable la configuration en hélice ouverte en solidifiant ladite matière polymère, ledit procédé étant caractérisé en ce que le mouvement rotatif alterné est communiqué à la matière polymère à l'état pâteux en soumettant le brin (2), en amont de la tête extrudeuse (4), à une torsion alternée et en ce que lesdits filaments sont introduits à l'intérieur de la matière polymère à l'état pâteux qui s'écoule à l'intérieur de la tête d'extrusion de manière que toute leur surface extérieure adhère à la matière polymère.

2. Procédé selon la revendication 1 caractérisé par le fait que la solidification de la matière polymère, grâce à laquelle est rendue stable la configuration en hélice ouverte des éléments filiformes enrobés dans celle-ci, est obtenue par refroidissement de la matière polymère lorsqu'elle sort de la tête extrudeuse.

3. Ligne de production de câbles du type dans lequel au moins un élément filiforme (8), présentant une configuration en hélice ouverte par rapport à l'axe du câble (11) où est positionné un brin (2), est enrobé dans une matière polymère de ce dernier, comprenant une tête extrudeuse (4) comportant au moins des orifices d'entrée distincts pour la matière polymère à l'état pâteux, pour au moins un élément filiforme (8) et pour un brin (2) et un mécanisme (3) associé à la tête extrudeuse, qui soumettent la matière à l'état polymère, tandis qu'elle avance le long de l'axe du câble, à un mouvement rotatif alterné par rapport à ce dernier, les ouvertures d'entrée (32) des éléments filiformes (8) de la tête d'extrudeuse débouchant dans le conduit (35) de cette dernière dans lequel la matière polymère à l'état pâteux s'écoule de telle manière que les éléments filiformes (8) deviennent complètement enrobés à l'intérieur de ladite matière polymère et sont ensuite entraînés le long de celle-ci en un mouvement rotatif alterné en prenant ainsi une configuration en hélice ouverte par rapport à l'axe du câble, ladite ligne étant caractérisée par le fait que le mécanisme (3) est positionné en amont de la tête extrudeuse (4), est en contact avec le brin (2) et soumet celui-ci à un mouvement rotatif alterné provoquant le mouvement rotatif alterné de la matière polymère qui s'écoule à l'intérieur de la tête extrudeuse.

**4.** Ligne selon la revendication 3, caractérisée en ce que le mécanisme (3) grâce auquel le brin (2) est soumis à un mouvement rotatif alterné comprend un arbre creux (19) comportant des moyens (21, 22, 23, 24) qui lui communiquent un mouvement rotatif alterné et une poulie (16), avec laquelle le brin est en contact, pouvant tourner librement sur son axe propre, ladite poulie étant amenée par des supports radialement en porte-à-faux à partir de l'arbre creux (19) et étant tangente à l'axe de ce dernier le long duquel le brin (2) est amené à passer.

**Patentansprüche**

**1.** Verfahren zur Herstellung von Kabeln (11) derjenigen Art, bei der wenigstens ein fadenförmiges Element (8), welches mit Bezug auf die Kabelachse die Gestalt einer offenen Wendel hat, in ein polymeres Material des Kabels eingebettet wird, wobei das Verfahren die Schritte umfaßt des Speisens eines Extruderkopfes (4) mit einem im Pastenzustand befindlichen polymeren Material, des Einsetzens wenigstens eines fadenförmigen Elementes (8) und eines Seiles (2) in den Extruderkopf (4) derart, daß das Seil (2) und die fadenförmigen Elemente (8) mit dem im Pastenzustand befindlichen polymeren Material, welches durch den Extruderkopf hindurchgeht, in direkter Berührung stehen und in das polymere Material eingebettet werden, des Unterwerfens des im Pastenzustand befindlichen polymeren Materials, während es sich entlang der Kabelachse vorwärts bewegt, einer abwechselnden Drehbewegung relativ zu der Achse, wobei es dem fadenförmigen Element (8) ermöglicht wird, der Bewegung des polymeren Materials zu folgen, und des stabilen Fixierens der offenen Wendelgestalt durch Verfestigen des polymeren Materials, dadurch gekennzeichnet, daß die abwechselnde Drehbewegung dem im Pastenzustand befindlichen polymeren Material erteilt wird, indem das Seil (2) stromaufwärts des Extruderkopfes (4) einer abwechselnden Torsion unterworfen wird, und daß die Fäden in das im Pastenzustand befindliche polymere Material, welches in dem Extruderkopf fließt, derart eingeführt werden, daß ihre gesamte Außenfläche an dem polymeren Material anhaftet.

**2.** Verfahren nach Anspruch 1, dadurch gekennzeichnet, daß das Verfestigen des polymeren Materials, durch welches die offene Wendelgestalt der fadenförmigen Elemente, die in das polymere Material eingebettet sind, stabilisiert wird, erhalten wird durch Abkühlen des polymeren Materials, wenn es aus dem Extruderkopf austritt.

**3.** Fertigungsstraße zur Herstellung von Kabeln derjenigen Art, bei der wenigstens ein fadenförmiges Element (8), das mit Bezug auf die Achse des Kabels (11), an welcher ein Seil (2) angeordnet ist, die Gestalt einer offenen Wendel hat, in ein polymeres Material des Kabels eingebettet wird, umfassend einen Extruderkopf (4), der mit wenigstens mit getrennten Einlaßöffnungen für das im Pastenzustand befindliche polymere Material für wenigstens ein fadenförmiges Element (8) und für ein Seil (2) versehen ist, und einen Mechanismus (3), der dem Extruderkopf zugeordnet ist und das im Pastenzustand befindliche polymere Material, wenn es sich entlang der Kabelachse vorwärts bewegt, einer abwechselnden Drehbewegung mit Bezug auf die letztere unterwirft, die Einlaßöffnungen (32) für die fadenförmigen Elemente (8) in dem Extruderkopf in den Durchgang (35) des letzteren münden, wobei das im Pastenzustand befindliche polymere Material derart fließt, daß die fadenförmigen Elemente (8) vollständig in das polymere Material eingebettet und dann entlang dieses in abwechselnde Drehbewegung gezogen werden, wodurch sie die Gestalt einer offenen Wendel mit Bezug auf die Kabelachse annehmen, dadurch gekennzeichnet, daß der Mechanismus (3) stromaufwärts des Extruderkopfes (4) angeordnet ist, mit dem Seil (2) im Eingriff steht und dieses einer abwechselnden Drehbewegung unterwirft, welche die abwechselnde Drehbewegung des in dem Extruderkopf fließenden polymeren Materials hervorruft.

**4.** Fertigungsstraße nach Anspruch 3, dadurch gekennzeichnet, daß der Mechanismus (3), mittels welchem das Seil (2) einer abwechselnden Drehbewegung unterworfen wird, eine hohle Welle (19), die mit Mitteln (21,22,23,24) versehen ist, die ihr eine abwechselnde Drehbewegung erteilen, und eine Scheibe (16) aufweist, die um ihre Achse frei drehbar ist und mit der das Seil im Eingriff steht, wobei die Scheibe durch Lagerarme, die von der hohlen Welle (19) radial frei vorragen, getragen ist und tangential zur Achse der letzteren verläuft, entlang welcher das Seil (2) laufen gelassen wird.

Fig. 1

Fig. 2

Fig. 3

Fig. 4

EP 0 218 952 B1